# EUROPÄISCHE PATENTANMELDUNG

(11) **EP 1 987 882 A1**
(43) Veröffentlichungstag der Anmeldung: **05.11.2008**
(21) Anmeldenummer: 08155161.6
(22) Anmeldetag: 25.04.2008
(51) Int. Cl.: B01J 41/04, B01J 45/00, B01J 47/00, C02F 1/42

(54) **Konditionierung von Ionenaustauschern zur Adsorption von Oxoanionen**

(30) Priorität: 03.05.2007 DE 102007020688
(71) Anmelder: LANXESS Deutschland GmbH, 51369 Leverkusen (DE)
(72) Erfinder: Klipper, Reinhold, 50933 Köln (DE); Schelhaas, Michael, 50733 Köln (DE); Neumann, Stefan, 51375 Leverkusen (DE); Stoll, Jens, 51371 Leverkusen (DE)

(57) **Zusammenfassung**

Die vorliegende Erfindung betrifft die Verwendung anorganischer Salze zur Steigerung der Adsorption von Oxoanionen und/oder deren Thioanaloga an Metall-dotierten Ionenaustauschern, bevorzugt an Eisenoxid/Eisenoxihydroxid-haltigen Ionenaustauschern, bevorzugt aus Wasser oder wässrigen Lösungen, sowie die Konditionierung dieser Metall-dotierten Ionenaustauscher mit gesteigertem Adsorptionsverhalten gegenüber Oxoanionen und/oder deren Thioanaloga durch Einsatz anorganischer Salze mit Ausnahme von amphoteren Ionenaustauschern, die als funktionelle Gruppen sowohl saure als auch basische Gruppen besitzen.

## Beschreibung

Die vorliegende Erfindung betrifft die Verwendung anorganischer Salze zur Steigerung der Adsorption von Oxoanionen und/oder deren Thioanaloga an Metall-dotierten Ionenaustauschern, bevorzugt an Eisenoxid/Eisenoxihydroxid-haltigen Ionenaustauschern, bevorzugt aus Wasser oder wässrigen Lösungen, sowie die Konditionierung dieser Metall-dotierten Ionenaustauscher mit gesteigertem Adsorptionsverhalten gegenüber Oxoanionen und/oder deren Thioanaloga durch Einsatz anorganischer Salze mit Ausnahme von amphoteren Ionenaustauschern, die als funktionelle Gruppen sowohl saure als auch basische Gruppen besitzen.

Ferner betrifft die Erfindung ein Verfahren zur Steigerung der Thermostabilität Metall-dotierter Ionenaustauscher, bevorzugt Eisenoxid/Eisenoxihydroxid-haltiger Ionenaustauscher, besonders bevorzugt Metall-dotierter Ionenaustauscher für die Adsorption von Oxoanionen und/oder deren Thioanaloga, ausgenommen amphotere Ionenaustauscher, die als funktionelle Gruppen sowohl saure als auch basische Gruppen besitzen, dadurch gekennzeichnete, dass man diese Ionenaustauscher im Anschluss an deren Herstellung mit anorganischen Salzen konditioniert.

Oxoanionen im Sinne der vorliegenden Erfindung haben die Formel XₙOₘ⁻, XₙOₘ²⁻, XₙOₘ³⁻, HXₙOₘ - oder H₂XₙOₘ²⁻ worin n für eine ganze Zahl 1, 2, 3 oder 4 steht, m für eine ganze Zahl 3, 4, 6, 7, oder 13 steht und X für ein Metall oder Übergangsmetall der Reihe Au, Ag, Cu, Si, Cr, Ti, Te, Se, V, As, Sb, W, Mo, U, Os, Nb, Bi, Pb, Co, Ni, Fe, Mn, Ru, Re, Tc, Al, B oder ein Nichtmetall der Reihe F, Cl, Br, J, CN, C, N, P, S steht. Erfindungsgemäß bevorzugt steht der Begriff Oxoanionen für die Formeln XOₘ²⁻, XOₘ³⁻, HXOₘ⁻ oder H₂XOₘ ²⁻ worin m für eine ganze Zahl 3 oder 4 steht und X für ein Metall oder Übergangsmetall der Reihe Cr, Te, Se, V, As, Sb, W, Mo, Bi, oder ein Nichtmetall der Reihe Cl, Br, J, C, N, P, S steht. Erfindungsgemäß besonders bevorzugt steht der Begriff Oxoanionen für Oxoanionen des Arsens in den Oxidationsstufen (III) und (V), des Antimons in den Oxidationsstufen (III) und (V), des Schwefels als Sulfat, des Phosphors als Phosphat, des Chroms als Chromat, des Wismuts als Bismutat, des Molybdäns als Molybdat, des Vanadiums als Vanadat, des Wolframs als Wolframat, des Selens als Selenat, des Tellur als Tellurat oder des Chlors als Chlorat oder Perchlorat. Erfindungsgemäß insbesondere bevorzugte Oxoanionen sind H₂AsO₃-, H₂AsO₄ , ⁻, HAsO₄²⁻, ASO₄ ³⁻, H₂SbO₃⁻,H₂SbO₄ ⁻, HSbO₄²⁻, SbO ₄ ³⁻, SeO₄²⁻, ClO₃⁻ ClO₄⁻ , BiO₄ ²⁻, SO₄²⁻, PO₄ ³⁻, Chromat. Erfindungsgemäß ganz besonders bevorzugt sind die Oxoanionen H₂AsO₃⁻, H₂AsO₄⁻, HAsO₄²⁻, ASO₄³⁻ sowie SeO₄²⁻ und Chromat. Im Sinne der vorliegenden Erfindung umfasst der Begriff Oxoanionen im Rahmen der vorliegenden Offenbarung auch die Thioanaloga worin anstelle des O in den oben genannten Formeln S für Schwefel steht.

Die Anforderungen an die Reinheit von Trinkwasser haben in den letzten Jahrzehnten deutlich zugenommen. Gesundheitsbehörden zahlreicher Länder haben Grenzwerte für Schwermetallkonzentrationen in Wässern erarbeitet. Dies betrifft insbesondere Schwermetalle wie Arsen, Antimon oder Chrom.

Unter bestimmten Bedingungen können beispielsweise Arsenverbindungen aus Gesteinen ausgelaugt werden und damit ins Grundwasser gelangen. In natürlichen Gewässern kommt Arsen als oxidische Verbindung mit drei- und fünfwertigem Arsen vor. Dabei zeigt sich, dass bei den in natürlichen Gewässern vorherrschenden pH-Werten hauptsächlich die Spezies HsAsO₃, H₂AsO₃ ⁻, H₂AsO₄ ⁻, HAsO₄ auftreten.

Neben den Chrom-, Antimon- und Selen Verbindungen sind leicht resorbierbare Arsen-Verbindungen hoch toxisch und krebserregend. Aber auch das aus dem Erzabbau ins Grundwasser gelangende Wismut ist gesundheitlich nicht unbedenklich.

In vielen Regionen der USA, Indien, Bangladesch, China sowie in Südamerika kommen zum Teil sehr hohe Konzentrationen an Arsen im Grundwasser vor.

Zahlreiche medizinische Studien belegen nun, dass sich bei Menschen, die über eine lange Zeit hohen Arsen Belastungen ausgesetzt sind, infolge chronischer Arsenvergiftung krankhafte Hautveränderungen (Hyperkeratosen) und verschiedene Tumorarten entwickeln können.

Ionenaustauscher werden in vielfältiger Weise zur Reinigung von Rohwässern, Abwässern und wässrigen Prozessströmen eingesetzt. Auch zur Entfernung von Oxoanionen, beispielsweise dem Arsenat sind Ionenaustauscher geeignet. So beschreiben R. Kunin und J. Meyers in Journal of American Chemical Society, Band. 69, Seite 2874 ff (1947) den Austausch von Anionen, wie beispielsweise Arsenat mit Ionenaustauschern, die primäre, sekundäre, und tertiäre Aminogruppen aufweisen.

In WO 2004/110623 A1 und in EP-A1 495 800 werden Verfahren zur Herstellung Eisenoxid/Eisenoxihydroxid-haltiger Carboxylgruppen-haltigen Ionenaustauscher beschrieben. Dieses Material adsorbiert Arsen bis zu niedrigen Restkonzentrationen ist aber in seiner Aufnahmekapazität limitiert.

EP-A1 568 660 offenbart ein Verfahren zur Entfernung von Arsen aus Wasser durch in Kontakt bringen mit einem starkbasischen Anionenaustauscher, der ein speziell definiertes Metallion oder ein metallhaltiges Ion enthält. In EP-A 1 568 660 wird darauf hingewiesen, dass die Selektivität gegenüber Arsen ansteigt, wenn sekundäre und tertiäre Aminogruppen durch Alkylierung in quarternäre Ammoniumgruppen überführt werden, wodurch gemäß EP-A1 568 660 starkbasische Anionenaustauscher charakterisiert sind. Wesentlich ist, dass das aus Metall und Arsenat gebildete Salz einen Kₛₚ nicht größer als 10 ⁻⁵ hat.

Ferner wird u. a. ein Verfahren zur Entfernung von Arsen(III) oder Arsen(V) aus Wasser durch in Kontakt bringen mit Metall-dotierten Ionenaustauschern in V.Lenoble et al., Science of the Total Environment 326 (2004) 197-207 mittels Mangandioxid-dotierter Ionenaustauscher auf Basis von Polystyrol, in I.Rao et al., Journal of Radioanalytical and Nuclear Chemistry, Vol. 246, No.3 (2000) 597-600 auf Basis Eisen(III) dotierter Chelatharze und in M. Hruby et al. Collect.Czech. Chem. Commun. Vol 68, 2003, 2159-2170 gelehrt.

Die aus dem Stand der Technik bekannten Arsenadsorber zeigen noch nicht die gewünschten Eigenschaften hinsichtlich Selektivität, Kapazität und Thermostabilität. Es besteht daher ein Bedarf nach neuen für Oxoanionen und/oder deren Thioanlaloga, insbesondere Oxoanionen des Arsens, spezifischen Ionenaustauschern bzw. Adsorbern in Perlform, die einfach herzustellen sind, eine verbesserte Adsorption von Oxoanionen und/oder deren Thioanaloga aufweisen sowie eine höhere Thermostabilität zeigen.

Eine höhere Thermostabilität der Adsorber ist erwünscht, da zum einen die Adsorber vor ihrem Einsatz in Lagerhäusern bei höheren Temperaturen gelagert werden können oder auch mit heißem Oxoanionen-haltigen Wasser in Kontakt kommen können.

Die Lösung der Aufgabe und somit Gegenstand der vorliegenden Erfindung ist die Verwendung Metall-dotierter Ionenaustauscher, ausgenommen amphoterer Ionenaustauscher die sowohl saure als auch basische funktionelle Gruppen besitzen, zur Adsorption von Oxoanionen und/oder deren Thioanaloga, bevorzugt aus Wasser oder wässrigen Lösungen, dadurch gekennzeichnet, dass diese vor dem Einsatz einer Behandlung mit einem anorganischen Salz unterzogen werden.

Im weiteren Verlauf dieser Anmeldung wird die Behandlung eines Metall-dotierten Ionenaustauschers mit einem anorganischen Salz als Konditionierung bezeichnet.

Die Erfindung betrifft aber auch ein Verfahren zur Steigerung der Adsorption von Oxoanionen und/oder deren Thioanaloga an Ionenaustauschern, dadurch gekennzeichnet, dass man Ionenaustauscher mit Ausnahme amphoterer Ionenaustauscher die sowohl saure als auch basische funktionelle Gruppen enthalten nach der Metall-Dotierung mit einem anorganischen Salz konditioniert. Das Verfahren wird bevorzugt in Wasser oder wässrigen Lösungen angewandt.

Angesichts des Standes der Technik war es überraschend, dass mit anorganischem Salz konditionierte Metall-dotierte, bevorzugt Eisenoxid/Eisenoxihydroxid-haltige Ionenaustauscher, eine gegenüber dem Stand der Technik nicht nur deutlich verbesserte Oxoanionen- bzw. Thioanionen-Adsorption zeigen, sondern auch generell für den Einsatz zur Adsorption von Oxoanionen und/oder deren Thioanaloga, bevorzugt von Arsenaten, Antimonaten, Phosphaten, Chromaten, Molybdaten, Wismutaten, Wolframaten oder Selenaten, besonders bevorzugt von Arsenaten oder Antimonaten der Oxidationsstufen (III) und (V) oder Selenaten aus wässrigen Lösungen geeignet sind.

In einer bevorzugten Ausführungsform betrifft die vorliegende Erfindung die Verwendung von mit anorganischem Salz behandelten Metall-dotierten Ionenaustauschern worin das Metall aus der Reihe Eisen, Calcium, Magnesium, Aluminium, Lanthan, Titan, Zink, Nickel, Cobalt, Mangan, Lithium oder Zinn ausgewählt wird, besonders bevorzugt mit den genannten Metallen deren Salz mit dem zu adsorbierenden Oxoanion und/oder dessen Thioanalogem einen Kₛₚ nicht größer als 10⁻⁵ hat, insbesondere bevorzugt Eisenoxid/Eisenoxihydroxid-haltige Ionenaustauscher. Der Metallgehalt des mit anorganischem Salz zu konditionierenden Ionenaustauschers beträgt bevorzugt 5 bis 30% des Trockengewichts des jeweiligen Ionenaustauschers.

In einer bevorzugten Ausführungsform betrifft die Erfindung den Einsatz anorganischer Salze zur Steigerung der Oxoanionen- und/oder deren Thioanaloga-Adsorptionsfähigkeit an Ionenaustauschern, ausgenommen von amphoteren Ionenaustauschern mit sowohl sauren als auch basischen funktionellen Gruppen, wobei es sich bei den anorganischen Salzen um für den Menschen physiologisch unbedenkliche Salze handelt, da die bevorzugte Anwendung in der Aufbereitung von Wässern für die Trinkwasserversorgung liegt. Erfindungsgemäß bevorzugt werden für die Konditionierung Natriumsulfat, Natriumcarbonat, Natriumphosphat, Natriumhydrogenphosphat, Natriumchlorid, Kaliumsulfat, Kaliumcarbonat, Kaliumchlorid, Kaliumphosphat, Kaliumhydrogenphosphat insbesondere bevorzugt Natriumchlorid eingesetzt. Der Einsatz des anorganischen Salzes erfolgt stets erst nach der Metall-Dotierung des zugrunde liegenden Ionenaustauschers wobei pro ml Ionenaustauscher 0,03 Gramm anorganisches Salz in Form wässriger Lösungen, bevorzugt 25gew.-%ige Lösungen eingesetzt wird.

Die Konditionierung des jeweiligen Ionenaustauschers mit dem anorganischen Salz erfolgt bevorzugt bei Temperaturen von 5 bis 30Grad Celsius, besonders bevorzugt 10 bis 25Grad Celsius, insbesondere bevorzugt bei Raumtemperatur.

Die Dosierung der wässrigen Lösung des anorganischen Salzes ist zeitlich unkritisch. Sie kann in Abhängigkeit von den technischen Gegebenheiten so zügig wie möglich erfolgen.

Die Ionenaustauscher können unter Rühren oder durch Filtration in Säulen mit den wässrigen Lösungen des anorganischen Salzes in Kontakt gebracht werden.

Pro Mol Ionenaustauscher werden bevorzugt 1 bis 10 Mol, besonders bevorzugt 3 bis 6 Mol anorganisches Salz eingesetzt.

Bevorzugt hat die wässrige Lösung des zur Konditionierung einzusetzenden anorganischen Salzes einen Gehalt an anorganischem Salz von 10 bis 40 Gew.-%, besonders bevorzugt von 20 bis 30 Gew.-% und bevorzugt einen pH-Wert von 5 bis 13, besonders bevorzugt von 6 bis 11, insbesondere bevorzugt von 7 bis 9.

Für die erfindungsgemäße Konditionierung mit anorganischem Salz werden Metall-dotierte Ionenaustauscher eingesetzt, die bevorzugt als funktionelle Gruppe Hydroxid, Ether, primäres Amin, sekundäres Amin, tertiäres Amin, quaternäres Amin, divalenten Schwefel, Aminoxid, Phosphonsäure, Iminodiessigsäure oder Hydroxylamin aufweisen.

Die erfindungsgemäß für die Konditionierung mit anorganischem Salz einzusetzenden Ionenaustauscher können sowohl heterodispers als auch monodispers sein. Erfindungsgemäß bevorzugt werden monodisperse Ionenaustauscher eingesetzt. Ihre Teilchengröße beträgt im Allgemeinen 250 bis 1250 µm, bevorzugt 280 - 600 11µm.

Die den monodispersen Ionenaustauschern zugrunde liegenden monodispersen Perlpolymerisate können nach bekannten Verfahren wie z. B. Fraktionieren, Verdüsen, Jetting oder nach der Seed-Feed-Technik hergestellt werden.

Die Herstellung monodisperser Ionenaustauscher ist dem Fachmann prinzipiell bekannt. Man unterscheidet neben der Fraktionierung heterodisperser Ionenaustauscher durch Siebung im wesentlichen zwei Direktherstellungsverfahren nämlich das Verdüsen oder Jetting und das Seed-Feed-Verfahren beim Herstellen der Vorstufen, den monodispersen Perlpolymerisaten. Im Falle des Seed-Feed-Verfahrens wird ein monodisperser Feed eingesetzt, der seinerseits beispielsweise durch Siebung oder durch Jetting erzeugt werden kann. Erfindungsgemäß werden monodisperse, basische Ionenaustauscher erhältlich durch Verdüsungsverfahren oder Jetting bevorzugt für die Adsorption von Oxoanionen eingesetzt.

Als monodispers werden in der vorliegenden Anmeldung solche Perlpolymerisate bzw. Ionenaustauscher bezeichnet, bei denen der Gleichheitskoeffizient der Verteilungskurve kleiner oder gleich 1,2 ist. Als Gleichheitskoeffizient wird der Quotient aus den Größen d60 und d10 bezeichnet. D60 beschreibt den Durchmesser, bei welchem 60 Massen-% in der Verteilungskurve kleiner und 40 Massen-% größer oder gleich sind. D10 bezeichnet den Durchmesser, bei welchem 10 Massen-% in der Verteilungskurve kleiner und 90 Massen-% größer oder gleich sind.

Das monodisperse Perlpolymerisat, die Vorstufe des Ionenaustauschers, kann beispielsweise hergestellt werden, indem man monodisperse, gegebenenfalls verkapselte Monomertropfen bestehend aus einer monovinylaromatischen Verbindung, einer polyvinylaromatischen Verbindung sowie einem Initiator oder Initiatorgemisch und gegebenenfalls einem Porogen in wässriger Suspension zur Reaktion bringt. Um makroporöse Perlpolymerisate für die Herstellung makroporöser Ionenaustauscher zu erhalten, ist die Anwesenheit von Porogen zwingend erforderlich. Erfindungsgemäß können sowohl gelförmige als auch makroporöse monodisperse basische Ionenaustauscher eingesetzt werden. In einer bevorzugten Ausführungsform der vorliegenden Erfindung werden monodisperse basische Ionenaustauscher eingesetzt zu deren Herstellung monodisperse Perlpolymerisate unter Einsatz mikroverkapselter Monomertröpfchen verwendet werden. Dem Fachmann sind die verschiedenen Herstellverfahren monodisperser Perlpolymerisate sowohl nach dem Jetting Prinzip als auch nach dem Seed-Feed Prinzip aus dem Stand der Technik bekannt. An dieser Stelle sei verwiesen auf US-A 4,444 961, EP-A 0 046 535, US-A 4,419,245 und WO 93/12167.

Als monovinylaromatische ungesättigte Verbindungen werden erfindungsgemäß bevorzugt Verbindungen wie Styrol, Vinyltoluol, Ethylstyrol, alpha-Methylstyrol, Chlorstyrol oder Chlormethylstyrol eingesetzt.

Als polyvinylaromatische Verbindungen (Vernetzer) werden bevorzugt Divinylgruppen-tragende aliphatische oder aromatische Verbindungen eingesetzt. Besonders bevorzugt werden Divinylbenzol, Divinyltoluol, Trivinylbenzol, Ethylenglykoldimethacrylat, Trimethylolpropantrimethacrylat, Hexadien-1.5, Octadien-1.7, 2,5-Dimethyl-1,5-hexadien sowie Divinylether eingesetzt.

Geeignete Divinylether sind Verbindungen der allgemeinen Formel (I), 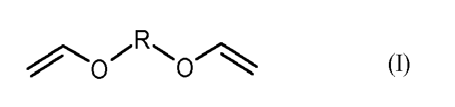 worin
R für einen Rest der Reihe CₙH₂ₙ ,(CₘH₂ₘ-O)ₚ₋CₘH₂ₘ oder CH₂-C₆H₄-CH₂ steht und n ≥ 2, m = 2 bis 8 und p ≥2 bedeuten.

Geeignete Polyvinylether im Falle n >2 sind Trivinylether von Glycerin, Trimethylolpropan oder Tetravinylether des Pentaerythrits.

Insbesondere bevorzugt werden Divinylether von Ethylenglykol, Di-, Tetra- oder Polyethylenglykol, Butandiol oder Poly-THF oder die entsprechenden Tri- oder Tetravinylether eingesetzt. Insbesondere ganz besonders bevorzugt sind die Divinylether von Butandiol und Diethylenglykol wie sie in der EP-A 11 10 608 beschrieben sind.

Die alternativ zur gelförmigen Eigenschaft gewünschte makroporöse Eigenschaft wird den Ionenaustauschern bereits bei der Synthese von deren Vorstufen, den Perlpolymerisaten, gegeben. Die Zugabe von sogenanntem Porogen ist dazu zwingend erforderlich. Der Zusammenhang von Ionenaustauschern und ihrer makroporösen Struktur ist in der deutschen Auslegeschrift DE 1045102 (1957) und in der Deutschen Auslegeschrift DE 1113570 (1957) beschrieben. Als Porogen für die Herstellung erfindungsgemäß einzusetzender makroporöser Perlpolymerisate um makroporöse basische Ionenaustauscher zu erhalten sind vor allem organische Substanzen geeignet, die sich im Monomeren lösen, das Polymerisat aber schlecht lösen bzw. quellen. Beispielhaft seien aliphatische Kohlenwasserstoffe wie Octan, Isooctan, Decan, Isododecan. Weiterhin gut geeignet sind Alkohole mit 4 bis 10 Kohlenstoffatomen, wie Butanol, Hexanol oder Octanol.

Neben den monodispersen gelförmigen Ionenaustauschern sind erfindungsgemäß bevorzugt also monodisperse Ionenaustauscher mit makroporöser Struktur zur Adsorption von Oxoanionen und/oder deren Thioanaloga einzusetzen. Der Begriff "makroporös" ist dem Fachmann bekannt. Einzelheiten werden beispielsweise in J.R.Millar et al J.Chem.Soc.1963, 218 beschrieben. Die makroporösen Ionenaustauscher besitzen ein durch Quecksilberporosimetrie ermitteltes Porenvolumen von 0,1 bis 2,2 ml/g, vorzugsweise von 0,4 bis 1,8 ml/g.

Die Funktionalisierung der nach dem Stand der Technik erhältlichen Perlpolymerisate zu monodispersen Ionenaustauschern mit den oben genannten bevorzugten funktionellen Gruppen ist dem Fachmann ebenfalls weitgehend aus dem Stand der Technik bekannt. Beispiele für derart funktionalisierte Ionenaustauscher werden in der DE-A 10200601737 genannt, deren Inhalt von der vorliegenden Anmeldung vollumfänglich mit umfasst ist.

Beschrieben wird in der DE-A 10200601737 hierin ein Verfahren zur Herstellung monodisperser, makroporöser basischer Ionenaustauscher mit schwachbasischen, mittelbasischen oder starkbasischen Gruppen nach dem sogenannten Phthalimidverfahren, indem man
a) Monomertröpfchen aus mindestens einer monovinylaromatischen Verbindung und mindestens einer polyvinylaromatischen Verbindung sowie einem Porogen und einem Initiator oder einer Initiatorkombination, zu einem monodispersen, vernetzten Perlpolymerisat umsetzt,
b) dieses monodisperse, vernetzte Perlpolymerisat mit Phthalimidderivaten amidomethyliert,
c) das amidomethylierte Perlpolymerisat zu einem basischen Ionenaustauscher mit Aminomethylgruppen umsetzt und
d) den basischen Ionenaustauscher durch Alkylierung zu schwachbasischen bis starkbasischen Anionenaustauschern mit sekundären und/oder tertiären und/oder quartären Aminogruppen reagieren lässt.

Erfindungsgemäß für die Adsorption von Oxoanionen und/oder deren Thioanaloga aus wässrigen Lösungen sind mit anorganischem Salz konditionierte, Metall-dotierte, monodisperse Ionenaustauscher hergestellt nach dem Phthalimidverfahren bevorzugt. Deren Substitutionsgrad beträgt bis zu 1,6, d.h. pro aromatischem Kern werden im statistischen Mittel bis zu 1,6 Wasserstoffatome durch CH₂NH₂-Gruppen substituiert. Nach dem Phthalimidverfahren können daher hoch kapazitive, nachvernetzungsfreie basische Ionenaustauscher hergestellt werden, die nach Umsetzung zu Metall-dotierten, bevorzugt Eisenoxid/Eisenoxihydroxid-haltigen, Ionenaustauschern und nach deren Konditionierung mit anorganischem Salz für die Adsorption von Oxoanionen und/oder deren Thioanaloga, bevorzugt von Arsenaten, Antimonaten oder Selenaten und/oder deren Thio-Analoga hervorragend geeignet sind und die primäre und/oder sekundäre und/oder tertiäre Aminogruppen oder quaternäre Ammoniumgruppen enthalten.

Das vor der Konditionierung mit anorganischem Salz zu erfolgende Dotieren der Ionenaustauscher zu einem Metall-dotierten Ionenaustauscher erfolgt mit entsprechenden Salzen jener Metalle. Im Eingangs zitierten Stand der Technik werden entsprechende Metallsalze zu den jeweiligen Metallen genannt.

Im Falle der erfindungsgemäß bevorzugt mit anorganischem Salz zu konditionierenden Eisendotierten Ionenaustauscher erfolgt die Dotierung vor der Konditionierung mit Eisen(II)salzen oder Eisen(III)salzen, bevorzugt mit einem nicht Komplexe bildenden Eisen(II)salz oder Eisen(III)salz. Als Eisen-(III)-Salze können dafür lösliche Eisen-(III)-Salze eingesetzt werden, bevorzugt Eisen(III)chlorid, Eisen(III)sulfat oder Eisen(III)nitrat.

Als Eisen-(II)-Salze können alle löslichen Eisen-(II)-Salze eingesetzt werden, insbesondere werden Eisen-(II)-chlorid, -sulfat, -nitrat eingesetzt. Bevorzugt erfolgt die Oxidation der Eisen-(II)-Salze in der Suspension im Verfahrensschritt a) durch Luft.

Für die bevorzugte Dotierung mit Eisen können die Ionenaustauscher unter Rühren oder durch Filtration in Säulen mit den Eisensalzlösungen in Kontakt gebracht werden. Pro Mol eingesetztem Eisensalz werden dabei zudem 1 bis 10 Mol, bevorzugt 3 bis 6 Mol Alkali- oder Erdalkalihydroxide eingesetzt. Pro Mol funktioneller Gruppe im Ionenaustauscher werden 0,05 bis 3 Mol, bevorzugt 0,2 bis 1,2 Mol Eisensalz eingesetzt. Die Einstellung des pH-Wertes im Dotierungsschritt erfolgt mittels Alkali- oder Erdalkalihydroxiden, insbesondere Kaliumhydroxid, Natriumhydroxid oder Calziumhydroxid, Alkali- oder Erdalkalicarbonaten oder Hydrogencarbonaten. Der pH-Wert Bereich, in dem das Dotieren also die Bildung von Eisenoxid/Eisenoxihydroxid-Gruppen erfolgt, liegt im Bereich zwischen 2 und 12, bevorzugt 3 und 9. Die dabei einzusetzenden Stoffe werden bevorzugt als wässrige Lösungen eingesetzt. Die Konzentration der wässrigen Alkalihydroxid- bzw. Erdalkalihydroxid- Lösungen kann bis zu 50 Gew.-% betragen. Bevorzugt werden wässrige Lösungen mit einer Alkalihydroxid- bzw. Erdalkalihydroxid- Konzentration im Bereich 20 bis 40 Gew.-% eingesetzt. Die Geschwindigkeit der Dosierung der wässrigen Lösungen an Alkali- bzw. Erdalkalihydroxid ist abhängig von der Höhe des gewünschten pH-Wertes und den technischen Gegebenheiten. Beispielsweise werden 120 Minuten hierzu benötigt. Nach Erreichen des gewünschten pH-Wertes werden 1 bis 10 Stunden, bevorzugt 2 bis 4 Stunden nachgerührt. Die Dosierung der wässrigen Lösungen an Alkali- bzw. Erdalkalihydroxid erfolgt bei Temperaturen zwischen 10 und 90°C, bevorzugt bei 30 bis 60°C.

Es hat sich bewährt zur Synthese Eisenoxid/Eisenoxihydroxid-haltiger Ionenaustauscher bevorzugt NaOH oder KOH als Base einzusetzen. Es kann aber auch jede andere Base verwendet werden, die zur Ausbildung von FeOH-Gruppen führt, wie beispielsweise NH₄OH, Na₂CO₃, CaO, Mg(OH)₂ usw. In prinzipiell gleicher Weise erfolgt das Dotieren mit den oben bereits genannten weiteren Metallen Ca, Mg, Al, La, Ti, Zn, Ni, Co, Mn, Li oder Sn.

Nach der Konditionierung mit anorganischem Salz erfolgt das Isolieren des fertig konditionierten Metall-dotierten Ionenaustauschers. Isolieren im Sinne der vorliegenden Erfindung bedeutet ein Abtrennen des Ionenaustauschers aus der wässrigen Lösung des anorganischen Salzes und die Reinigung des fertig konditionierten Ionenaustauschers. Die Abtrennung erfolgt nach den für den Fachmann bekannten Maßnahmen wie Dekantieren, Zentrifugieren, Filtrieren. Die Reinigung erfolgt durch Waschen mit beispielsweise entionisiertem Wasser und kann eine Klassierung zur Abtrennung von Feinanteilen bzw. Grobanteilen beinhalten. Gegebenenfalls kann der mit anorganischem Salz konditionierte Metall-dotierte Ionenaustauscher getrocknet werden, bevorzugt bei reduziertem Druck und/oder besonders bevorzugt bei Temperaturen zwischen 20°C und 120°C.

Überraschenderweise adsorbieren die erfindungsgemäß mit anorganischem Salz konditionierten Ionenaustauscher Oxoanionen und/oder deren Thioanaloga, beispielsweise des Arsens nicht nur in seinen verschiedensten Oxidationsstufen, sondern daneben zusätzlich Oxoanionen oder deren Thioanaloge von Schwermetallen, bevorzugt Oxoanionen oder deren Thioanaloge von Chrom, Kobalt, Nickel, Blei, Zink, Cadmium, Kupfer. Wie bereits oben beschrieben gleichermaßen zum Ionenaustausch durch die erfindungsgemäß einzusetzenden mit anorganischem Salz konditionierten Ionenaustauscher befähigt sind auch zu HAsO₄²⁻ bzw. H₂AsO₄⁻ isostrukturelle Ionen wie z. B. Dihydrogenphosphate, Vanadate, Molybdate, Wolframate, Antimonate, Wismutate, Selenate oder Chromate. Die erfindungsgemäß mit anorganischem Salz konditionierten Ionenaustauscher eignen sich insbesondere bevorzugt zur Adsorption der Spezies H₂AsO₃ H₂AsO₄ ⁻, HAsO₄²⁻, ,ASO₄³⁻, H₂SbO₃⁻, H₂SbO₄⁻, HSbO₄²⁻, SbO₄³⁻, SeO₄²⁻.

Die erfindungsgemäß mit anorganischem Salz konditionierten Metall-dotierten Ionenaustauscher, bevorzugt die Eisenoxid/Eisenoxihydroxid-haltigen konditionierten Ionenaustauscher, können bevorzugt zur Reinigung von Oxoanionen und deren Thioanaloga enthaltenden Wässern oder wässrigen Lösungen jeglicher Art angewandt werden. Besonders bevorzugt erfolgt ihr Einsatz zur Reinigung von Trinkwasser, von Abwasserströmen der chemischen Industrie oder von Müllverbrennungsanlagen sowie von Grubenwässern oder Sickerwässern von Deponien.

Die erfindungsgemäß einzusetzenden mit anorganischem Salz konditionierten Metall-dotierten Ionenaustauscher, bevorzugt die erfindungsgemäßen Eisenoxid/Eisenoxihydroxid-haltigen konditionierten Ionenaustauscher werden bevorzugt in für ihre Aufgaben geeigneten Vorrichtungen eingesetzt.

Die Erfindung betrifft deshalb auch von einer zu behandelnden Flüssigkeit durchströmbare Vorrichtungen, bevorzugt Filtrationseinheiten, besonders bevorzugt Adsorptionsbehälter, insbesondere Filteradsorptionsbehälter, gefüllt mit Metall-dotierten Ionenaustauschern, bevorzugt mit Eisenoxid/Eisenoxihydroxid-haltigen Ionenaustauschern erhältlich nach dem in dieser Anmeldung beschriebenen Verfahren, zur Entfernung von Oxoanionen und/oder deren Thioanaloga, bevorzugt zur Entfernung von Oxoanionen des Arsens, Antimons oder Selens, insbesondere des Arsens, aus wässrigen Medien oder Gasen, bevorzugt Trinkwasser. Die Vorrichtungen können z.B. im Haushalt, an die öffentliche Sanitär- oder die öffentliche Trinkwasserversorgung angeschlossen werden

### Untersuchungsmethoden

### Bestimmung der Aufnahmefähigkeit für Arsen in der Oxidationsstufe V:

Zur Messung der Adsorption von Arsen(V) werden in einer 300 ml Polyethylen-Flasche 24 Stunden lang 250 ml einer wässrigen Lösung von Na₂HAsO₄, mit einer Menge an As(V) von 2800 ppb auf einen pH Wert von 8,5 eingestellt und mit 0,3 ml Arsenadsorber geschüttelt. Nach 24 Stunden wird in der überstehenden Lösung die Restmenge an Arsen (V) analysiert.

### Bestimmung der Thermostabilität von Oxoanionenadsorbern

In einen 300 ml Schliffglaskolben werden 50 ml vollentsalztes Wasser vorgelegt. Dazu werden 50 ml Oxoanionenadsorber bei Raumtemperatur eingetragen . Der Glaskolben wird anschließend für 5 Tage bei 70°C in einem Trockenschrank aufbewahrt. Danach wird die Suspension in eine Säule gefüllt, die flüssige Phase läuft ab, der Adsorber wird mit 100 ml vollentsalztem Wasser von oben gewaschen. Anschließend wird seine Aufnahmefähigkeit für Arsen nach der oben genannten Meßmethode - Bestimmung der Aufnahmefähigkeit für Arsen in der Oxidationsstufe V - ermittelt.

### Bestimmung der Menge an basischen Aminomethylgruppen im aminomethylierten, vernetzten Polystyrol Perlpolymerisat

100 ml des aminomethylierten Perlpolymerisates werden auf dem Stampfvolumeter eingerüttelt und anschließend mit vollentsalztem Wasser in eine Glassäule gespült. In 1 Stunde und 40 Minuten werden 1000 ml 2 gew.-%ige Natronlauge überfiltriert. Anschließend wird vollentsalztes Wasser überfiltriert bis 100 ml Eluat mit Phenolphthalein versetzt einen Verbrauch an 0,1 n (0,1 normaler) Salzsäure von höchstens 0,05 ml haben.

50 ml dieses Harzes werden in einem Becherglas mit 50 ml vollentsalztem Wasser und 100 ml In Salzsäure versetzt. Die Suspension wird 30 Minuten gerührt und anschließend in eine Glassäule gefüllt. Die Flüssigkeit wird abgelassen. Es werden weitere 100 ml In Salzsäure über das Harz in 20 Minuten filtriert. Anschließend werden 200 ml Methanol überfiltriert. Alle Eluate werden gesammelt und vereinigt und mit In Natronlauge gegen Methylorange titriert.

Die Menge an Aminomethylgruppen in 1 Liter aminomethyliertem Harz errechnet sich nach folgender Formel: (200 - V) · 20 = mol Aminomethylgruppen pro Liter Harz, worin V für das Volumen der bei der Titration verbrauchten 1 n Natronlauge steht.

### Bestimmung des Substitutionsgrades der aromatischen Kerne des vernetzten Perlpolymerisates durch Aminomethylgruppen

Die Menge Aminomethylgruppen in der Gesamtmenge des aminomethylierten Harzes wird nach obiger Methode bestimmt.

Aus der Menge eingesetzten Perlpolymerisats - A in Gramm - wird durch Division mit dem Molekulargewicht die in dieser Menge vorliegende Molmenge an Aromaten errechnet.

Beispielsweise werden aus 300 Gramm Perlpolymerisat 950 ml aminomethyliertes Perlpolymerisat mit einer Menge von 1,8 mol/l Aminomethylgruppen hergestellt.

950 ml aminomethyliertes Perlpolymerisat enthalten 2,82 mol Aromaten.

Pro Aromat liegen dann 1,8 / 2,81 = 0,64 mol Aminomethylgruppen vor.

Der Substitutionsgrad der aromatischen Kerne des vernetzten Perlpolymerisates durch Aminomethylgruppen beträgt 0,64.

### Anzahl perfekter Perlen nach Herstellung

100 Perlen werden unter dem Mikroskop betrachtet. Ermittelt wird die Anzahl der Perlen, die Risse tragen oder Absplitterungen zeigen. Die Anzahl perfekter Perlen ergibt sich aus der Differenz der Anzahl beschädigter Perlen zu 100.

### Bestimmung der Stabilität des Harzes nach dem Walztest

Das zu prüfende Perlpolymerisat wird in gleichmäßiger Schichtdicke zwischen zwei Kunststofftücher verteilt. Die Tücher werden auf eine feste, waagerecht angebrachte Unterlage gelegt und in einer Walzapparatur 20 Arbeitsakten unterworfen. Ein Arbeitstakt besteht aus einer vor und zurück durchgeführten Walzung. Nach dem Walzen werden an repräsentativen Mustern an 100 Perlen durch Auszählen unter dem Mikroskop die Anzahl der unversehrten Perlen ermittelt.

### Quellungsstabilitätstest

In eine Säule werden 25 ml Anionenaustauscher in der Chloridform eingefüllt. Nacheinander werden 4 gew.-%ige wässrige Natronlauge, vollentsalztes Wasser, 6 gew.-%ige Salzsäure und nochmals voll entsalztes Wasser in die Säule gegeben, wobei die Natronlauge und die Salzsäure von oben durch das Harz fließen und das vollentsalzte Wasser von unten durch das Harz gepumpt wird. Die Behandlung erfolgt zeitgetaktet über ein Steuergerät. Ein Arbeitszyklus dauert 1 h. Es werden 20 Arbeitszyklen durchgeführt. Nach Ende der Arbeitszyklen werden von dem Harzmuster 100 Perlen ausgezählt. Ermittelt wird die Anzahl der perfekten Perlen, die nicht durch Risse oder Absplitterungen geschädigt sind.

### Bestimmung der Menge an schwach- oder stark basischen Gruppen in Anionenaustauschern

100 ml Anionenaustauscher werden in einer Glassäule in 1 Stunde und 40 Minuten mit 1 000 ml 2 gew.-%iger Natronlauge beaufschlagt. Anschließend wird das Harz mit vollentsalztem Wasser zur Entfernung des Überschusses an Natronlauge gewaschen.

### Bestimmung der NaCl-Zahl

50 ml des in der freien Basenform und neutral gewaschenen Austauschers werden in eine Säule gegeben und mit 950 ml 2,5 gew.-%iger wässriger Natriumchloridlösung beaufschlagt. Der Ablauf wird aufgefangen, mit vollentsalztem Wasser auf 1 Liter aufgefüllt und hiervon werden 50 ml mit 0,1 n Salzsäure titriert. Das Harz wird mit vollentsalztem Wasser gewaschen.

Verbrauchte ml 0,1 n Salzsäure x 4 / 100 = NaCl-Zahl in mol/Liter Harz.

### Bestimmung der NaNO₃-Zahl

Dann werden 950 ml 2,5 gew.-%ige Natriumnitratlösung überfiltriert. Der Ablauf wird mit vollentsalztem Wasser auf 1 000 ml aufgefüllt. Hiervon wird ein aliquoter Teil - 10 ml - abgenommen und auf seinen Chloridgehalt durch Titration mit Quecksilbernitratlösung analysiert.

### Bestimmung der HCl-Zahl

Das Harz wird mit vollentsalztem Wasser gewaschen und in ein Becherglas gespült. Es wird mit 100 ml 1 n Salzsäure versetzt und 30 Minuten lang stehen gelassen. Die gesamte Suspension wird in eine Glassäule gespült. Weitere 100 ml Salzsäure werden über das Harz filtriert. Das Harz wird mit Methanol gewaschen. Der Ablauf wird mit vollentsalztem Wasser auf 1 000 ml aufgefüllt. Hiervon werden 50 ml mit 1 n Natronlauge titriert.

(20 - verbrauchte ml 1 n Natronlauge) / 5 = HCl-Zahl in mol / Liter Harz.

Die Menge an stark basischen Gruppen ist gleich der Summe aus NaNO₃-Zahl und HCl-Zahl.

Die Menge an schwach basischen Gruppen ist gleich der HCl-Zahl.

### Beispiele

### Beispiel 1

### 1a) Herstellung eines monodispersen, makroporösen Perlpolymerisates auf der Basis von Styrol, Divinylbenzol und Ethylstyrol

In einem 10 1 Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25 °C temperiert. Unter Rühren wird anschließend eine Mischung aus 3200 g mikroverkapselter Monomertröpfchen mit enger Teilchengrößenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt. Die mittlere Teilchengröße der Monomertröpfchen beträgt 460 µm.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet. Man erhält 1893 g eines kugelförmigen Polymerisates mit einer mittleren Teilchengröße von 440 µm, enger Teilchengrößenverteilung und glatter Oberfläche.

Das Polymerisat ist in der Aufsicht kreidig weiß und weist eine Schüttdichte von ca. 370 g/l auf.

### 1b) Herstellung eines amidomethylierten Perlpolymerisates

Bei Raumtemperatur werden 3567 g Dichlorethan, 867 g Phthalimid und 604 g 29,8 gew.-%iges Formalin vorgelegt. Der pH Wert der Suspension wird mit Natronlauge auf 5,5 bis 6 eingestellt. Anschließend wird das Wasser destillativ entfernt. Dann werden 63,5 g Schwefelsäure zudosiert. Das entstehende Wasser wird destillativ entfernt. Der Ansatz wird abgekühlt. Bei 30°C werden 232 g 65 %iges Oleum und anschließend 403 g monodisperses Perlpolymerisat, hergestellt nach Verfahrensschritt 1a) eindosiert. Die Suspension wird auf 70°C erhitzt und weitere 6 Stunden bei dieser Temperatur gerührt. Die Reaktionsbrühe wird abgezogen, voll entsalztes Wasser wird hinzudosiert und Restmengen an Dichlorethan werden destillativ entfernt.

Ausbeute an amidomethyliertem Perlpolymerisat : 2600 ml

Elementaranalytische Zusammensetzung:
Kohlenstoff: 74,9 Gew. %;
Wasserstoff: 4,6 Gew. %;
Stickstoff: 6,0 Gew. %;
Rest: Sauerstoff.

### 1c) Herstellung eines aminomethylierten Perlpolymerisates

Zu 1250 ml amidomethyliertem Perlpolymerisat aus 1b) werden 624 g 50 gew.-%ige Natronlauge und 1093 ml vollentsalztes Wasser bei Raumtemperatur zudosiert. Die Suspension wird in 2 Stunden auf 180°C erhitzt und 8 Stunden bei dieser Temperatur gerührt. Das erhaltene Perlpolymerisat wird mit vollentsalztem Wasser gewaschen.

### Ausbeute an aminomethyliertem Perlpolymerisat : 1110 ml

Als Gesamtausbeute - hochgerechnet - ergeben sich 2288 ml.

Elementaranalytische Zusammensetzung:
Stickstoff: 12,6 Gew. %
Kohlenstoff: 78,91 Gew. %;
Wasserstoff: 8,5 Gew. %;

Aus der elementaranalytischen Zusammensetzung des aminomethylierten Perlpolymerisates lässt sich errechnen, dass im statistischen Mittel pro aromatischem Kern, herrührend aus den Styrol und Divinylbenzoleinheiten, 1,34 Wasserstoffatome durch Aminomethylgruppen substituiert wurden.

Die Menge basischer Gruppen wurde bestimmt als 2,41 mol/ Liter Harz

### 1d) Herstellung eines Perlpolymerisates mit tertiären Aminogruppen

In einem Reaktor werden 1380 ml vollentsalztes Wasser, 920 ml aminomethyliertes Perlpolymerisat aus 1c) und 490 g 29,7 gew.%ige Formalinlösung bei Raumtemperatur vorgelegt. Die Suspension wird auf 40°C erwärmt. Der pH Wert der Suspension wird durch Dosierung von 85 gew.-%iger Ameisensäure auf pH 3 eingestellt. Innerhalb von 2 Stunden wird die Suspension auf Rückflusstemperatur (97°C) erwärmt. Während dieser Zeit wird der pH Wert durch Dosierung von Ameisensäure bei 3,0 gehalten. Nach Erreichen der Rückflusstemperatur wird der pH Wert zunächst durch Dosierung von Ameisensäure, dann durch Dosierung von 50 gew.%iger Schwefelsäure auf 2 eingestellt. Es wird 30 Minuten bei pH 2 nachgerührt. Dann wird weiter 50 gew.-%ige Schwefelsäure dosiert und der pH Wert auf 1 eingestellt. Bei pH 1 und Rückflusstemperatur wird weitere 8,5 Stunden gerührt.

Der Ansatz wird abgekühlt, das Harz auf einem Sieb abfiltriert und mit voll entsalztem Wasser gewaschen.

### Volumenausbeute : 1430 ml

In einer Säule werden über das Harz 2500 ml 4 gew.-%ige wässrige Natronlauge filtriert. Anschließend wird mit Wasser gewaschen.

Volumenausbeute : 1010 ml

Elementaranalytische Zusammensetzung:
Stickstoff: 12,4 Gew.-%
Kohlenstoff: 76,2 Gew.-%;
Wasserstoff: 8,2 Gew.-%;
Die Bestimmung der Menge an basischen Gruppen ergab 2,22 mol/ Liter Harz.

### Beispiel 2

### Herstellung eines Oxoanionenaustauschers mit zusätzlicher Behandlung des Austauschers mit wässriger Natriumchloridlösung

### Apparatur : 2 Liter Reaktor, Rührer, Thermometer, Tropftrichter, Dosierpumpe

Im Reaktor werden bei Raumtemperatur 180 ml voll entsalztes Wasser und 300 ml monodisperser, makroporöser Anionenaustauscher mit Dimethylaminogruppen aus Beispiel 1 vorgelegt.

Unter Rühren wird in 60 Minuten 243 ml 40 gew.-%ige, wässrige Eisen(III)sulfat-Lösung dosiert. Danach wird 30 Minuten nachgerührt. Der pH Wert der Suspension liegt bei pH 1,9.

Nun wird bei 25 - 30 °C schrittweise 50 gew.-%ige Natronlauge dosiert.

Es wird Natronlauge dosiert bis die Suspension einen pH Wert von 2,5 zeigt. Dann wird weitere 30 Minuten gerührt.

Weitere Natronlauge wird dosiert bis die Suspension einen pH Wert von 3,5 zeigt. Dann wird weitere 30 Minuten gerührt.

Weitere Natronlauge wird dosiert bis die Suspension einen pH Wert von 4,0 zeigt. Dann wird weitere 30 Minuten gerührt.

Weitere Natronlauge wird dosiert bis die Suspension einen pH Wert von 4,5 zeigt. Dann wird weitere 30 Minuten gerührt.

Weitere Natronlauge wird dosiert bis die Suspension einen pH Wert von 5,0 zeigt. Dann wird weitere 30 Minuten gerührt.

Weitere Natronlauge wird dosiert bis die Suspension einen pH Wert von 6,0 zeigt. Dann wird weitere 30 Minuten gerührt.

Weitere Natronlauge wird dosiert bis die Suspension einen pH Wert von 7,0 zeigt. Dann wird weitere 2 Stunden gerührt.

Anschließend werden innerhalb von 10 Minuten 37,5 ml 25 gew.-%ige wässrige Natriumchloridlösung dosiert. Danach wird 30 Minuten nachgerührt.

Das Reaktionsgemisch wird auf ein Sieb gegeben und mit Wasser gewaschen. Auf dem Sieb verbleibt der Adsorber. Zur weiteren Reinigung wird der Adsorber in eine Säule überführt und von unten zur Entfernung flüssiger und fester Verunreinigungen mit Wasser klassiert.

Volumenausbeute : 465 ml

Verbrauch an Natronlauge : 2,85 mol NaOH

Trockengewicht : 33,61 Gramm pro 100 ml

Eisengehalt : 14 Gew. %

Chloridgehalt: 0,76 Gew. %

### Beispiel 3

### Herstellung eines Oxoanionenaustauschers ohne Behandlung des Austauschers mit wässriger Natriumchloridlösung

### Apparatur : 2 Liter Reaktor, Rührer, Thermometer, Tropftrichter, Dosierpumpe

Im Reaktor werden bei Raumtemperatur 180 ml voll entsalztes Wasser und 300 ml monodisperser, makroporöser Anionenaustauscher mit Dimethylaminogruppen aus Beispiel 1 vorgelegt.

Unter Rühren wird in 60 Minuten 243 ml 40gew.%ige, wässrige Eisen(III)sulfat-Lösung dosiert. Danach wird 30 Minuten nachgerührt. Der pH Wert der Suspension liegt bei 1,9.

Nun wird bei 25 - 30 °C schrittweise 50gew.%ige Natronlauge dosiert.

Es wird Natronlauge dosiert bis die Suspension einen pH Wert von 2,5 zeigt. Dann wird weitere 30 Minuten gerührt.

Weitere Natronlauge wird dosiert bis die Suspension einen pH Wert von 3,5 zeigt. Dann wird weitere 30 Minuten gerührt.

Weitere Natronlauge wird dosiert bis die Suspension einen pH Wert von 4,0 zeigt. Dann wird weitere 30 Minuten gerührt.

Weitere Natronlauge wird dosiert bis die Suspension einen pH Wert von 4,5 zeigt. Dann wird weitere 30 Minuten gerührt.

Weitere Natronlauge wird dosiert bis die Suspension einen pH Wert von 5,0 zeigt. Dann wird weitere 30 Minuten gerührt.

Weitere Natronlauge wird dosiert bis die Suspension einen pH Wert von 6,0 zeigt. Dann wird weitere 30 Minuten gerührt.

Weitere Natronlauge wird dosiert bis die Suspension einen pH Wert von 7,0 zeigt. Dann wird weitere 2 Stunden gerührt.

Das Reaktionsgemisch wird auf ein Sieb gegeben und mit Wasser gewaschen. Auf dem Sieb verbleibt der Adsorber. Zur weiteren Reinigung wird der Adsorber in eine Säule überführt und von unten zur Entfernung flüssiger und fester Verunreinigungen mit Wasser klassiert.

Volumenausbeute : 480 ml

Verbrauch an Natronlauge : 2,83 mol NaOH

Trockengewicht : 33,95 Gramm pro 100 ml

Eisengehalt : 13 Gew. %

### Beispiel 4

### Bestimmung der Arsenadsorbtion - siehe Tabelle 1

Durch Lösen von Dinatriumhydrogenarsenat in Wasser wird eine Lösung hergestellt, die 2800 ppb Arsen enthält. Der pH Wert dieser Lösung wird auf pH 8,5 eingestellt.

Zu 250 Gramm dieser Lösung werden 0,3 ml Adsorber aus Beispiel 3 dosiert. Die Suspension wird 24 Stunden lang bei Raumtemperatur geschüttelt.

Anschließend wird in der überstehenden Lösung der Restgehalt an Arsen analysiert.

Restgehalt an Arsen : 15 ppb

### Beispiel 5

### Bestimmung der Arsenadsorbtion - siehe Tabelle 1

Durch Lösen von Dinatriumhydrogenarsenat in Wasser wird eine Lösung hergestellt, die 2800 ppb Arsen enthält. Der pH Wert dieser Lösung wird auf pH 8,5 eingestellt.

Zu 250 Gramm dieser Lösung werden 0,3 ml Adsorber aus Beispiel 2 dosiert. Die Suspension wird 24 Stunden lang bei Raumtemperatur geschüttelt.

Anschließend wird in der überstehenden Lösung der Restgehalt an Arsen analysiert.

Restgehalt an Arsen : 7 ppb

### Beispiel 6 - siehe Tabelle 2

### Bestimmung der Thermostabilität und Aufnahmefähigkeit für Arsen eines nicht konditionierten Oxoanionenadsorbers

50 ml Adsorber aus Beispiel 3 werden in 50 ml voll entsalztes Wasser eingetragen und 5 Tage lang bei 70°C gehalten. Die Suspension wird abgekühlt, anschließend in eine Säule gegeben und über das Harz werden 100 ml voll entsalztes Wasser filtriert.

Durch Lösen von Dinatriumhydrogenarsenat in Wasser wird eine Lösung hergestellt, die 2800 ppb Arsen enthält. Der pH Wert dieser Lösung wird auf pH 8,5 eingestellt.

Zu 250 Gramm dieser Lösung werden 0,3 ml Adsorber aus Beispiel 6 dosiert. Die Suspension wird 24 Stunden lang bei Raumtemperatur geschüttelt.

Anschließend wird in der überstehenden Lösung der Restgehalt an Arsen analysiert.

Restgehalt an Arsen : 550 ppb

### Beispiel 7 - siehe Tabelle 2

### Bestimmung der Thermostabilität und Aufnahmefähigkeit für Arsen eines konditionierten Oxoanionenadsorbers

50 ml Adsorber aus Beispiel 2 werden in 50 ml voll entsalztes Wasser eingetragen und 5 Tage lang bei 70°C gehalten. Die Suspension wird abgekühlt, anschließend in eine Säule gegeben und über das Harz werden 100 ml voll entsalztes Wasser filtriert.

Durch Lösen von Dinatriumhydrogenarsenat in Wasser wird eine Lösung hergestellt, die 2800 ppb Arsen enthält. Der pH Wert dieser Lösung wird auf 8,5 eingestellt.

Zu 250 Gramm dieser Lösung werden 0,3 ml Adsorber aus Beispiel 7 dosiert. Die Suspension wird 24 Stunden lang bei Raumtemperatur geschüttelt.

Anschließend wird in der überstehenden Lösung der Restgehalt an Arsen analysiert.

Restgehalt an Arsen : 45 ppb
**Tabelle 1**

**Tabelle 1 Ergebnisse zur Aufnahmefähigkeit von Arsen von konditionierten und nicht konditionierten Adsorbern**

| **Beispiel** | **Adsorber** | **Konditionierung des Adsorbers** | **Restmenge an Arsen in ppb** |
|---|---|---|---|
| 4 | Beispiel 3 | Mit wässriger Natriumchloridlösung konditioniert | 7 |
| 5 | Beispiel 2 | Nicht mit wässriger Natriumchloridlösung konditioniert | 15 |

**Tabelle 2**

**Tabelle 2 Ergebnisse zur Aufnahmefähigkeit von Arsen von konditionierten und nicht konditionierten Adsorbern nach 5 tägigem Lagern bei 70 °C**

| **Beispiel** | **Adsorber** | **Konditionierung des Adsorbers** | **Restmenge an Arsen in ppb** |
|---|---|---|---|
| 6 | Beispiel 2 | Nicht mit wässriger Natriumchloridlösung konditioniert | 550 |
| 7 | Beispiel 3 | Mit wässriger Natriumchloridlösung konditioniert | 45 |

## Patentansprüche

1. Verwendung Metall-dotierter Ionenaustauscher, ausgenommen amphoterer Ionenaustauscher die sowohl saure als auch basische funktionelle Gruppen besitzen, zur Adsorption von Oxoanionen und/oder deren Thioanaloga, **dadurch gekennzeichnet, dass** diese vor dem Einsatz einer Konditionierung mit einem anorganischen Salz unterzogen werden.

2. Verwendung gemäß Anspruch 1, **dadurch gekennzeichnet, dass** die Ionenaustauscher mit einem Metall der Reihe Eisen, Calcium, Magnesium, Aluminium, Lanthan, Titan, Zink, Nickel, Cobalt, Mangan, Lithium oder Zinn dotiert sind.

3. Verwendung gemäß Anspruch 2, **dadurch gekennzeichnet, dass** das Eisen als Eisenoxid/Eisenoxyhydroxid im Ionenaustauscher enthalten ist.

4. Verwendung gemäß einem der Ansprüche 1 bis 3 **dadurch gekennzeichnet, dass** der konditionierte Ionenaustauscher eine funktionelle Gruppe der Reihe Hydroxid, Ether, primäres Amin, sekundäres Amin, tertiäres Amin, quaternäres Amin, divalenten Schwefel, Aminoxid, Phosphonsäure, Iminodiessigsäure oder Hydroxylamin aufweist.

5. Verwendung gemäß einem der Ansprüche 1 bis 4, **dadurch gekennzeichnet, dass** das Metall mit dem zu adsorbierenden Oxoanion und/oder dessen Thioanalogem ein Salz mit einen Kₛₚ nicht größer als 10⁻⁵ bildet.

6. Verwendung gemäß einem der Ansprüche 1 bis 5, **dadurch gekennzeichnet, dass** die einzusetzenden Ionenaustauscher monodispers sind.

7. Verwendung gemäß Anspruch 6, **dadurch gekennzeichnet, dass** es sich um monodisperse makroporöse Ionenaustauscher handelt.

8. Verwendung gemäß einem der Ansprüche 6 oder 7, **dadurch gekennzeichnet, dass** die Vorstufe des monodispersen Ionenaustauschers nach dem Verdüsungs- oder Jetting Verfahren hergestellt wird.

9. Verwendung gemäß der Ansprüche 1 bis 6, **dadurch gekennzeichnet, dass** die Oxoanionen der Formeln XₙOₘ⁻ , XₙOₘ²⁻, XₙOₘ³⁻, HXₙOₘ⁻ oder H₂XₙOₘ²⁻ worin n für eine ganze Zahl 1,2,3 oder 4 steht, m für eine ganze Zahl 3, 4, 6, 7, oder 13 steht und X für ein Metall oder Übergangsmetall der Reihe Au, Ag, Cu, Si, Cr, Ti, Te, Se, V, As, Sb, W, Mo, U, Os, Nb, Bi, Pb, Co, Ni, Fe, Mn, Ru, Re, Tc, B, Al, oder ein Nichtmetall der Reihe F, Cl, Br, J, CN, C, N, P, S steht adsorbiert werden.

10. Verwendung gemäß Anspruch 9, **dadurch gekennzeichnet, dass** es sich bei den Oxoanionen um H₂AsO₃ ⁻, H2AsO₄⁻ HASO₄ ⁻² , AsO₄ ³⁻ , H₂SbO₃⁻, H₂SbO₄⁻ , HSbO₄²⁻, SbO₄³⁻, SeO₄²⁻ ^^^^^^, Chromat handelt.

11. Verwendung gemäß der Ansprüche 1 bis 10, **dadurch gekennzeichnet, dass** die Ionenaustauscher zur Reinigung von Wasser oder wässrigen Lösungen eingesetzt werden.

12. Verwendung gemäß Anspruch 11, **dadurch gekennzeichnet, dass** es sich bei dem zu reinigenden Wasser um Trinkwasser, Abwasserströme der chemischen Industrie oder von Müllverbrennungsanlagen, von Grubenwässern oder Sickerwässern von Deponien handelt.

13. Verwendung gemäß der Ansprüche 1 bis 12, **dadurch gekennzeichnet, dass** die konditionierten Metall-dotierten Ionenaustauscher in von der zu behandelnden Flüssigkeit durchströmbare Vorrichtungen eingesetzt werden.

14. Verwendung gemäß der Ansprüche 1 bis 13, **dadurch gekennzeichnet, dass** als anorganisches Salz ein Salz der Reihe Natriumsulfat, Natriumcarbonat, Natriumphosphat, Natriumhydrogenphosphat, Natriumchlorid, Kaliumsulfat, Kaliumcarbonat, Kaliumchlorid, Kaliumphosphat, Kaliumhydrogenphosphat, bevorzugt Natriumchlorid, eingesetzt wird.

15. Verfahren zur Steigerung der Adsorption von Oxoanionen und/oder deren Thioanaloga an Ionenaustauschern, **dadurch gekennzeichnet, dass** man Ionenaustauscher mit Ausnahme amphoterer Ionenaustauscher die sowohl saure als auch basische funktionelle Gruppen enthalten nach der Metall-Dotierung mit einem anorganischen Salz konditioniert.

16. Verfahren zur Steigerung der Thermostabilität Metall-dotierter Ionenaustauscher, ausgenommen amphoterer Ionenaustauscher die als funktionelle Gruppen sowohl saure als auch basische Gruppen besitzen, **dadurch gekennzeichnete, dass** man diese Ionenaustauscher im Anschluss an deren Herstellung mit anorganischen Salzen konditioniert.
